# EUROPÄISCHE PATENTSCHRIFT

(11) **EP 0 249 893 B1**
(45) Veröffentlichungstag und Bekanntmachung des Hinweises auf die Patenterteilung: **17.03.1993**
(21) Anmeldenummer: 87108460.4
(22) Anmeldetag: 11.06.1987
(51) Int. Cl.: B01D 35/20, B01D 46/02, B01D 29/11, B01D 29/72, B01D 29/52

(54) **Vorrichtung zum Abscheiden von Flüssigkeit und/oder Gas aus einer Mischung**
Device for the separation of a liquid and/or a gas from a mixture
Dispositif de séparation d'un liquide et/ou un gaz d'un mélange

(30) Priorität: 17.06.1986 AT 1648/86
(43) Veröffentlichungstag der Anmeldung: 23.12.1987
(73) Patentinhaber: Chemap AG, CH-8604 Volketswil (CH)
(72) Erfinder: Katinger, Hermann Wolf-Dieter, Prof.Dr.Dipl.-Ing., A-1100 Wien (AT)
(74) Vertreter: Vonnemann, Gerhard, Dr.-Ing.

(56) Entgegenhaltungen:
- WO-A-86/07284
- WO-A-87/05322
- CH-A- 497 910
- CH-A- 602 162
- CH-A- 625 130
- DE-A- 2 102 863
- DE-A- 2 146 838
- FR-A- 1 130 754
- FR-A- 2 165 841
- US-A- 3 622 004
- US-A- 4 267 039

## Beschreibung

Die Erfindung betrifft eine Vorrichtung zum Abscheiden von Flüssigkeit und/oder Gas aus einer dispergierte Teilchen enthaltenden, flüssigen oder gasförmigen Mischung, mit einem Behälter zur Aufnahme der Mischung, einem im Betrieb von dieser beaufschlagten, für zurückzuhaltende Teilchen vorbestimmter Mindestgröße undurchlässigen im wesentlichen zylindrischen Sieb- oder Filterkörper sowie Vorrichtungen zum Abführen der hindurchtretenden Flüssigkeit oder Gase, wobei der oder die Sieb- oder Filterkörper mit einem Schwingungserzeuger zur Erzeugung einer Vibration mit einer Schwingungsrichtung parallel zur Filterfläche verbunden und im Behälter senkrecht angeordnet sind, der eine, vorzugsweise im unteren Bereich angeordnete, Zuführöffnung für die flüssige und/oder gasförmige Mischung und eine, vorzugsweise im oberen Bereich angeordnete, Abführöffnung für von den zurückzuhaltenden Teilchen befreite Flüssigkeit und/oder Gas aufweist.

Eine derartige Vorrichtung ist aus der CH-A-602 162 bekannt, bei der zum Klassieren von in Flüssigkeiten suspendierten Feststoffen eine Mischung in einem Kessel einem in Schwingungen versetzten Siebkorb zugeführt wird, durch den die Flüssigkeit und die erwünschten kleinen Teilchen hindurchtreten, während die nicht durch die Sieböffnungen passenden Teilchen zurückgehalten werden, wobei die Vibration des Siebkörpers den Aufbau eines Filterkuchens verhindern soll. Der Filterrückstand setzt sich in einem konischen Teil des Kessels ab und kann dort von Zeit zu Zeit über ein Ventil abgezogen werden. Der Siebkorb ist als Hohlzylinder ausgebildet, dessen Innenfläche geschlossen und dessen Außenfläche als Siebblech ausgebildet ist. Ferner ist alternativ vorgesehen, daß auf dem Siebblech ein feineres Gewebe aufgebracht wird, um auch kleinere Partikel zurückhalten zu können.

Auch bei anderen bekannten Sieb- oder Filterverfahren können jeweils diejenigen Teilchen durch die Sieb- oder Filterfläche hindurchtreten, deren Teilchengröße kleiner ist als die Durchgangsweite der Sieb- oder Filteröffnungen. Derartige Methoden haben jedoch den Nachteil, daß sich die zurückzuhaltenden Teilchen auf der Sieb- oder Filterfläche unter Bildung eine Filterkuchens ansammeln, wobei sie zum Teil durch die Flüssigkeitsströmung auch in die Durchgangsöffnungen hineingedrängt werden, so daß es in relativ kurzen Abständen erforderlich ist, den Filterkuchen von der Sieb- oder Filterfläche zu entfernen und deren Durchgangsöffnungen wieder hinreichend freizulegen. Man hat versucht, diesen Problemen durch verschiedene Maßnahmen, beispielsweise die sogenannte Querstromfiltration (Cross Flow Filtration) entgegenzuwirken, bei welcher die Mischung parallel zur Filterfläche an dieser vorbeigeführt wird, wodurch die Flüssigkeitsströmung jeweils die abgeschiedenen Feststoffe von der Filterfläche fortschwemmen soll. Stattdessen hat man auch versucht, die Sieb- und Filterfläche in Rotation zu versetzen, um dadurch deren Oberfläche von Belag weitgehend freizuhalten. Alle diese Maßnahmen haben jedoch nur begrenzte Wirksamkeit und sind insbesondere für viele biotechnologische Zwecke, beispielsweise Biokatalysatoren, wie Mikroorganismen, Zellkulturen, etc. enthaltende Mischungen wegen der auftretenden hohen Scherkräfte ungeeignet.

Aus der nachveröffentlichten WO-A-86/07284 (Stand der Technik nach Art. 54(3) EPÜ) ist ein Filterkörper bekannt, der insbesondere zur Verwendung bei biologischen Materialien vorgesehen ist und dessen Filterfläche in Vibrationen versetzt wird, so daß Partikelgrößen zurückgehalten werden, für die der Filterkörper in Ruhe durchlässig wäre. Der Filterkörper wird dabei in Richtung seiner Oberfläche bewegt.

Die ebenfalls nachveröffentlichte WO-A-87/05322 (Stand der Technik nach Art. 54(3)EPÜ) offenbart eine Filtervorrichtung, die im Zusammenhang mit biologischen Materialien benutzt wird und eine Siebfläche mit Öffnungen aufweist, deren Durchmesser den der zurückzuhaltenden Teilchen übersteigt. Zur Erzeugung einer den Durchtritt der zurückzuhaltenden Teilchen durch die größeren Öffnungen des Filters verhindernden Bewegung wird das Filter in Richtung seiner Oberfläche zu Schwingungen angeregt.

Die DE-A-21 46 838 beschreibt eine Filtervorrichtung, bei der die zu filtrierende Flüssigkeit mit einem Oszillator zu Schwingungen mit Schall- oder Ultraschallfrequenzen angeregt wird. Die Flüssigkeit führt parallel zur Oberfläche des Filtermediums Schwingungen mit vorbestimmter Schwingungsgeschwindigkeit und einer Amplitude aus, die größer als der Innendurchmesser der Poren des Filtermediums ist, so daß Teilchen, deren Größe über einem vorbestimmten Wert liegt, daran gehindert sind, in das Filtermedium einzudringen.

Aufgabe der Erfindung ist es daher, ausgehend von der CH-A-602 162 eine Vorrichtung zu schaffen, die ohne Verstopfungen ein wirksames Abscheiden von Flüssigkeit und/oder Gas unter weitestgehender, leicht regel- und aufhebbarer Zurückhaltung dispergierter Teilchen ermöglicht.

Die Aufgabe wird durch die im kennzeichnenden Teil von Anspruch 1 angeführten Merkmale gelöst.

Bei der erfindungsgemäßen Vorrichtung entsteht durch die Schwingungen des Sieb- oder Filterkörpers ein in seinem Ausmaß von der Schwingungsamplitude und/oder der Schwingungsfrequenz beeinflußter Rückhalteeffekt durch die sich im Bereich der Durchgangsöffnungen der Sieb- oder Filterfläche ausbildenden Druckwellen, welches auf die zurückzuhaltenden Teilchen derart einwirken, daß sie trotz ihrer relativ zu den Durchgangsöffnungen kleineren Teilchengröße nicht durch diese hindurch austreten können. Außerdem werden durch die Schwingungen Belagsbildungen an der Sieb- oder Filterfläche weitgehend verhindert und dadurch infolge der jederzeit freien Durchgangsfläche der Filtrationswiderstand niedriggehalten. Durch die wirksame Zurückhaltung von gegenüber den Durchgangsöffnungen kleineren Teilchen können für die Abscheidung Sieb- oder Filterflächen mit sehr viel größeren Durchgangsöffnungen gewählt werden, was einen maximalen Durchfluß ermöglicht.

Einbauten im Innenraum der Sieb- oder Filterkörpers, beispielsweise Querscheiben, mit sich in Richtung zur Abführöffnung verengenden Durchlässen erzielen eine Pumpwirkung, welche die von den zurückzuhaltenden Teilchen befreite Flüssigkeit schneller von der Austrittsseite der Sieb- oder Filterfläche wegfördert.

Vorteilhafte weitere Ausführungsformen dieser Vorrichtung sind in den Unteransprüchen 2 bis 3 beschrieben.

Wenn der Behälter jeweils mit Rückschlagventilen ausgestattete Zuführ- und Abführöffnungen aufweist, wird hierdurch ebenfalls eine Pumpwirkung erzielt, durch die das aufzutrennende Gemisch selbsttätig angesaugt und die abgeschiedene Flüssigkeit selbsttätig abtransportiert wird.

Wenn die Schwingungsamplitude und/oder die Schwingungsfrequenz des Schwingungserzeugers einstell- und regelbar ist, kann die Vorrichtung rasch und einfach auf jede zu behandelnde Mischung eingestellt werden, wobei es insbesondere während des Betriebes möglich ist, durch zweckentsprechende Regelung dieser Parameter einen optimalen Verlauf der Abscheidung sicherzustellen. Ein wichtiger Vorteil besteht auch darin, daß es durch Stillsetzen des Schwingungserzeugers oder durch geeignete Veränderung seiner Schwingungsparameter ohne weiteres möglich ist, die Rückhaltewirkung für die Teilchen jederzeit mit sofortiger Wirkung aufzuheben oder auf das gewünschte Ausmaß zu vermindern.

Da die erfindungsgemäße Vorrichtung keine drehenden Teile und keine Durchführungen drehender Teile durch stehende Wandungen aufweist, ist sie leicht sterilisierbar und dadurch für biotechnologische Zwecke besonders geeignet.

Im folgenden wird eine bevorzugte Ausführungsform der Vorrichtung unter Bezugnahme auf die beigefügten Zeichnungen weiter erläutert. Es zeigen:
- Fig. 1: - einen schematischen Vertikalschnitt durch eine Ausführungsform der Vorrichtung und
- Fig. 2: - einen Querschnitt längs der Linie IV-IV der Fig. 1.

Die erfindungsgemäße Vorrichtung weist einen im wesentlichen zylindrischen Behälter 1 auf, der in seinem unteren Bereich 2 konisch zuläuft und an dessen tiefster Stelle eine Zuführöffnung 3 für die zu trennende Mischung aufweist. Am oberen Ende des Behälters 1 ist eine Ablauföffnung 4 für die mit den zurückzuhaltenden Teilchen angereichert flüssige Phase angebracht. Im Innenraum des Behälters 1 ist ein im wesentlichen zylindrischer Sieb- oder Filterkörper 5 angeordnet, welcher aus mehreren, an einem gemeinsamen Sammelraum 15 angeschlossenen Sieb- oder Filterrohren 14 besteht, deren Durchgangsöffnungen 5'' eine freie Durchgangsweite aufweisen, die den Durchmesser der zurückzuhaltenden Teilchen übersteigt. Der Sieb- oder Filterkörper 5 durchsetzt einen Deckel 6 aus flexiblem Material und ist mittels eines Schwingungserzeugers 7 in Schwingungen versetzbar, deren Schwingungsamplitude und Schwingungsfrequenz durch nicht dargestellte Vorrichtungen einstell- und regelbar sind. Im Inneren des Sieb- oder Filterkörpers 5 ist ferner eine Abführleitung 8 für die von den zurückzuhaltenden Teilchen befreite Flüssigkeit angeordnet. Der untere Bereich 5' des Sieb- oder Filterkörpers 5 ist vom unteren Bereich 2 des Behälters 1 beabstandet und in gleichem Sinne konisch ausgebildet, wie dieser.

Während bei allen dargestellten Ausführungsformen sowohl die Außenwand des Behälters 1, als auch der Sieb- oder Filterkörper 5 eine zylindrische Form aufweisen, kann diese Form je nach den Anforderungen des Einzelfalles in verschiedener Weise zweckentsprechend abgewandelt sein.

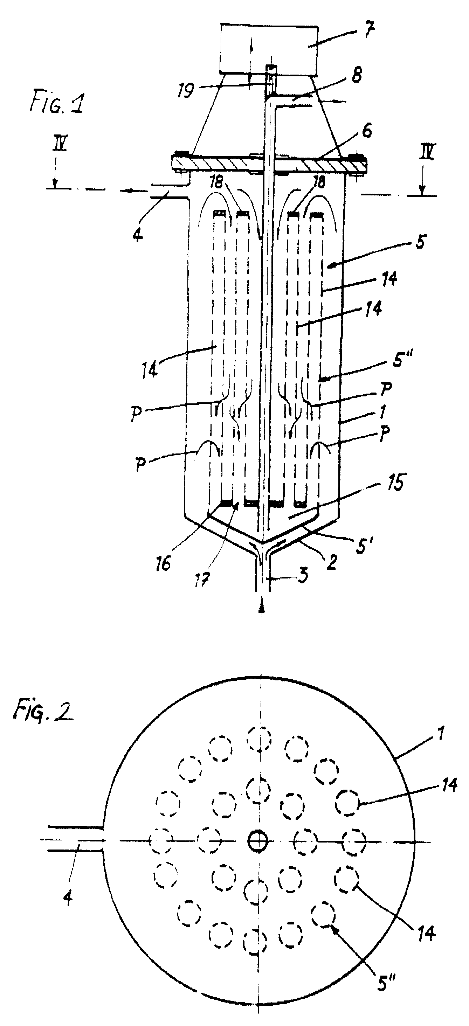

Bei der in den Fig. 1 und 2 dargestellten Ausführungsform sind mehrere in Abständen voneinander parallel verlaufende, dünne Sieb- oder Filterrohre 14 mit Durchgangsöffnungen 5'' vorgesehen, deren Inneneraum mit einem gemeinsamen Sammelraum 15 verbunden ist, der mit der Abführöffnung 8 für die von den zurückzuhaltenden Teilchen freie Phase kommuniziert. Dabei sind die unteren Enden der Sieb- und Filterrohre 14 in zugehörige Öffnungen 17 einer Platte 16 eingefügt, während ihre oberen Enden durch Stopfen 18 verschlossen sind. Derartige dünne Sieb- oder Filterrohre 14 können auch sog. Hohlfasern sein, welche zu größeren Einheiten (sog. Mehrfach-Rohrmodulen) gebündelt zusammengefaßt sein können und entsprechende große Filteroberflächen ergeben.

Zum Betrieb wird die aufzutrennende Mischung über die Zulauföffnung 3 in den Behälter 1 eingebracht und der Sieb- oder Filterkörper 5 mittels des Schwingungserzeugers 7 über die Verbindungsstange 19 in solche Schwingungen versetzt, daß deren Amplitude und Frequenz den Durchtritt der zurückzuhaltenden Teilchen durch die Durchgangsöffnungen der Sieb- oder Filterrohre 14 verhindert.

Es kommt damit zu einer Anreicherung der zurückzuhaltenden Teilchen in dem Raum zwischen der Innenwand des Behälters 1 und dem Sieb- bzw. Filterkörper 5. Die von den zurückzuhaltenden Teilchen befreite Phase kann jedoch durch die Durchtrittsöffnungen hindurch in das Innere der Sieb- oder Filterrohre 14 gelangen (siehe Pfeile P). Die von den zurückzuhaltenden Teilchen befreite Phase wird dann über die Abführöffnung 8 abgeführt. Die mit den zurückzuhaltenden Teilchen angereicherte Phase tritt über die Abführöffnung aus dem Behälter 1 aus.

Einbauten im Innenraum der Sieb- oder Filterkörpers, beispielsweise Querscheiben, mit sich in Richtung zur Abfuhröffnung verengenden Durchlässen erzielen eine Pumpwirkung, welche die von den zurückzuhaltenden Teilchen befreite Flüssigkeit schneller von der Austrittsseite der Sieb- oder Filterfläche wegfördert. Rückschlagventile verhindern dabei ein Rückpumpen der Mischung in die Zuführöffnung 3 bzw. ein Rücksaugen aus den Abführöffnungen 4 und 8.

Bei der dargestellten Ausführungsform ist der Sieb- oder Filterkörper 5 an dem aus elastischem Material gefertigten Deckel 6 aufgehängt, wobei innerhalb des Behälters 1 vielfach keine weitere Stützung mehr erforderlich ist. Da die über die Verbindungsstange 19 übertragene Schwinungsamplitude die Elastizitätsgrenze des Deckelmaterials nicht übersteigen, kann die Verbindungsstange 19 mit dem Deckel 6 fest verbunden sein, daß lediglich die Abführöffnung 8 für die von den zurückzuhaltenden Teilchen befreite Phase dicht durch den Deckel 6 hindurchgeführt werden muß. Damit bedarf es keiner Dichtung zwischen einem bewegten und einem stillstehenden Teil, was insbesondere für steril zu betreibende Vorrichtungen wesentlich ist.

Die Durchgangsöffnungen 5'' der Sieb- oder Filterrohre 14 sind jeweils übertrieben groß dargestellt und haben in Wirklichkeit nur einen Durchmesser von meist unter 100 µm. Infolge der Schwingungen des Sieb- oder Filterkörpers werden dabei Teilchen zurückgehalten, deren Durchmesser noch erheblich geringer sind, als die Durchgangsweite der Durchgangsöffnungen 5''. Der Schwingungserzeugar 7 besitzt nicht dargestellte Regelvorrichtungen zur Einstellung und Regelung sowohl der Frequenz als auch der Amplitude der Schwingungen. Hierdurch kann die Rückhaltewirkung der Vorrichtung den Erfordernissen zweckentsprechend angepaßt werden. Durch die Schwingungen des Sieb- oder Filterkörpers 5 wird auch das Absetzen der zurückzuhaltenden Teilchen am Sieb- bzw. Filterkörper 5 weitgehend verhindert, so daß die Druchgangsöffnungen 5'' für den Durchgang der Trägerphase freibleiben.

## Patentansprüche

1. Vorrichtung zum Abscheiden von Flüssigkeit und/oder Gas aus einer dispergierte Teilchen enthaltenden, flüssigen oder gasförmigen Mischung, mit einem Behälter (1) zur Aufnahme der Mischung, einem im Betrieb von dieser beaufschlagten, für zurückzuhaltende Teilchen vorbestimmter Mindestgröße undurchlässigen im wesentlichen zylindrischen Sieb- oder Filterkörper (5) sowie Vorrichtungen zum Abführen der hindurchtretenden Flüssigkeit oder Gase, wobei der oder die Sieb- oder Filterkörper (5) mit einem Schwingungserzeuger (7) zur Erzeugung einer Vibration mit einer Schwingungsrichtung parallel zur Filterfläche verbunden und im Behälter (1) senkrecht angeordnet sind, der eine, vorzugsweise im unteren Bereich (2) angeordnete, Zuführöffnung (3) für die flüssige und/oder gasförmige Mischung und eine, vorzugsweise im oberen Bereich angeordnete, Abführöffnung (8) für von den zurückzuhaltenden Teilchen befreite Flüssigkeit und/oder Gas aufweist, **dadurch gekennzeichnet**, daß der Sieb- oder Filterkörper (5) aus mehreren, in Abständen parallel zueinander verlaufenden Sieb- oder Filterrohren (14) besteht, welche an einem Ende mit einem gemeinsamen Sammelraum (15) verbunden sind und in ihrem Inneren mit Einbauten (9) zur Erzielung einer Pumpwirkung versehen sind, die sich in Richtung zur Abführöffnung (8) verengende Durchlaßöffnungen (10) aufweisen, wobei die Sieb- oder Filterrohre (14) Öffnungen (5'') mit den Durchmesser der zurückzuhaltenden Teilchen übersteigender freier Durchgangsweite aufweisen und die Sieb- oder Filterrohre (14) durch den Schwingungserzeuger (7) in den Durchtritt der zurückzuhaltenden Teilchen durch die demgegenüber größeren Öffnungen (5'') mindestens weitgehend verhindernde Vibrationen versetzbar sind.

2. Vorrichtung nach Anspruch 1, **dadurch gekennzeichnet**, daß die Zuführöffnung (3) und/oder die Abführöffnung (8) mit einem Rückschlagventil (11, 12, 13) versehen sind.

3. Vorrichtung nach Anspruch 1,2 oder 3, **dadurch gekennzeichnet**, daß der Schwingungserzeuger (7) mit Vorrichtungen zur Einstellung und Regelung der Schwingungsamplitude und/oder der Schwingungsfrequenz versehen ist.

## Claims

1. A device for separating liquid and/or gas from a liquid or gaseous mixture containing dispersed particles, comprising a container (1) which accommodates the mixture, a substantially cylindrical screening- or filter body (5) which during operation is acted upon by said mixture and which is impermeable to particles of a predetermined minimum size which are to be retained, and devices for discharging the liquid or gases which pass through, where the screening- or filter body or bodies (5) is/are connected to a vibration generator (7) which generates a vibration with a direction of vibration parallel to the filter surface and is/are arranged perpendicularly in the container (1), which container comprises a supply opening (3), preferably arranged in the lower region (2), for the liquid and/or gaseous mixture and a discharge opening (8), preferably arranged in the upper region, for liquid and/or gas freed of the particles to be retained, characterised in that the screening- or filter body (5) consists of a plurality of parallel screening- or filter tubes (14) arranged at intervals from one another, which are connected at one end to a common collecting chamber (15) and in their interior are provided with built-in components (9) which serve to produce a pumping effect and which contain through-holes (10) which narrow in the direction of the discharge opening (8), where the screening- or filter tubes (14) can be set by the vibration generator in vibrations which at least substantially prevent the passage of the particles which are to be retained through the comparatively larger holes (5'').

2. A device as claimed in Claim 1, characterised in that the supply opening (3) and/or the discharge opening (8) are provided with a non-return valve (11, 12, 13).

3. A device as claimed in Claim 1, 2 or 3, characterised in that the vibration generator (7) is provided with devices for adjusting and regulating the vibration amplitude and/or the vibration frequency.

## Revendications

1. Dispositif pour séparer un liquide et/ou un gaz d'un mélange liquide ou gazeux contenant des particules à l'état dispersé, dispositif comprenant un réservoir (1) recevant le mélange, un corps de tamis ou de filtre (5), essentiellement cylindrique, imperméable à des particules à retenir et ayant une dimension minimale prédéterminée, ce corps de filtre étant soumis à l'action du mélange, ainsi que des dispositifs pour évacuer le liquide ou les gaz traversants, le ou les corps de tamis ou de filtre (5) étant relié(s) à un générateur de vibrations (7), pour générer des vibrations ayant une direction d'oscillation parallèle à la surface du filtre, ces corps de filtre étant placés verticalement dans le réservoir (1), ce dernier ayant, de préférence dans sa partie inférieure (2), un orifice d'alimentation (3) du mélange liquide et/ou gazeux et un orifice d'évacuation (8), de préférence dans sa partie supérieure, pour le liquide et/ou le gaz libéré des particules à retenir, dispositif caractérisé en ce que le corps de tamis ou de filtre (5) se compose de plusieurs tubes de tamis ou de filtre (14), parallèles, écartés les uns des autres, reliés par leur extrémité inférieure à une chambre collectrice commune (15) et ayant intérieurement des inserts (9) pour créer un effet de pompage, ces inserts ayant des orifices traversants (10) allant en diminuant vers l'orifice de sortie (8), les tubes de tamis ou de filtre (14) étant munis de mailles (5'') dont l'ouverture libre dépasse le diamètre des particules à retenir et les tubes de tamis ou de filtre (14) étant mis en vibrations par le générateur de vibrations (7) pour éviter, au moins dans une large mesure, le passage des particules à travers les mailles (5'') de dimensions beaucoup plus grandes.

2. Dispositif selon la revendication 1, caractérisé en ce que l'orifice d'alimentation (3) et/ou l'orifice d'évacuation (8) sont munis d'un clapet anti-retour (11, 12, 13).

3. Dispositif selon les revendications 1 et 2, caractérisé en ce que le générateur de vibrations (7) est muni de dispositifs pour régler et réguler l'amplitude et/ou la fréquence des oscillations.
